Europäisches Patentamt

(19) European Patent Office

Office européen des brevets

(11) Veröffentlichungsnummer: **0 136 404**
**B1**

(12) # EUROPÄISCHE PATENTSCHRIFT

(45) Veröffentlichungstag der Patentschrift:
**16.08.89**

(21) Anmeldenummer: **84106770.5**

(22) Anmeldetag: **14.06.84**

(51) Int. Cl.⁴: **G 05 B 19/405**

(54) **Verfahren zum Darstellen von dreidimensionalen Gebilden.**

(30) Priorität: **27.07.83 DE 3327117**

(43) Veröffentlichungstag der Anmeldung:
**10.04.85 Patentblatt 85/15**

(45) Bekanntmachung des Hinweises auf die Patenterteilung:
**16.08.89 Patentblatt 89/33**

(84) Benannte Vertragsstaaten:
**AT CH DE FR GB IT LI NL SE**

(56) Entgegenhaltungen:
**EP-A- 0 124 615**
**EP-A- 0 130 219**
**EP-A- 0 152 772**
**FR-A- 2 512 982**
**US-A- 3 924 244**

(73) Patentinhaber: **Dr. Johannes Heidenhain GmbH,
Nansenstrasse 17, D-8225 Traunreut (DE)**

(72) Erfinder: **Andernach, Dieterich, Dr., Haushofer
Strasse 34, D-8221 Seebruck (DE)**
Erfinder: **Wurm, Manfred, Dr., Herzog-Platz 11,
D-8011 Zorneding (DE)**

## Beschreibung

Die Erfindung bezieht sich auf ein Verfahren zur zweidimensionalen Darstellung eines Gebildes gemäß dem Oberbegriff des Anspruches 1.

Es sind verschiedene Arten von Werkstückdarstellungen bekannt, die mehr oder weniger gut geeignet sind, die Bedienungsperson beim Programmieren zu unterstützen. So ist in dem Prospekt mit dem Druckvermerk ALTR 81–8 10 000 der Firma Yamazaki Machinery Works, Ltd., Japan eine Steuerung MAZATROL T–1 beschrieben, bei der auf dem Bildschirm das eingegebene Programm in Form einer Werkzeugwegekontur angezeigt wird. Diese Darstellung ist verwirrend, denn eine Werkzeugwegekontur bleibt bestehen, auch wenn bei späteren Bearbeitungsgängen die ehemalige Werkstückkontur durch weiteres Bearbeiten entfernt wird. Zum Schluß ist nicht nur die Kontur des fertigen Werkstückes zu erkennen, sondern eine Vielzahl von Linien, die alle einmal Werkzeugwegekonturen waren. Dadurch entsteht sehr schnell eine unübersichtliche Darstellung.

Der Gegenstand der vorstehenden Druckschrift ist auch in der DE-A1-3 234 426 ausführlich abgehandelt.

Ferner wurde auf der «EMO 83» in Paris eine Steuerung bekannt, die in einer Firmendruckschrift der Firma MAHO, D-8962 Pfronten beschrieben ist. Dort wird in drei Projektionen ein Werkstück gezeigt, das mit einem Fräser bearbeitet wird. Um erkennen zu können, welche Tiefe ein Bearbeitungsvorgang erreicht hat, muß eine andere Projektion betrachtet werden, die allerdings auch nicht alle Kanten zeigt, sondern eine Darstellung lediglich der jeweiligen Silhouette ist. Der Betrachter hat daher keinen räumlich wirkenden Eindruck des Werkstückbildes, sondern er kann die verschiedenen Bearbeitungsebenen nur durch Einbeziehung aller drei Projektionen visuell ermitteln. Die bekannten Darstellungsarten von Werkstücken sind daher noch nicht zufriedenstellend, oder zu aufwendig, wie etwa die dreidimensionale Darstellung mit Hilfe von CAD (Computer Aided Design).

Der Erfindung liegt daher die Aufgabe zugrunde, ein Verfahren zur Darstellung von dreidimensionalen Gebilden zu schaffen, das die räumliche Darstellung verbessert, mit dem Veränderungen am Gebilde darstellbar sind und das mit deutlich geringerem Rechneraufwand durchführbar ist, als etwa beim «Computer Aided Design» erforderlich ist.

Diese Aufgabe wird durch ein Verfahren gemäß Anspruch 1 gelöst.

Die Vorteile des erfindungsgemäßen Verfahrens liegen in der guten plastisch wirkenden Darstellung von bearbeiteten Werkstücken, so daß schon bei der Programmierung das Aussehen des zu fertigenden Werkstückes beurteilt werden kann. Der erforderliche Rechneraufwand hält sich in Grenzen, so daß er von Mikroprozessoren – wie sie bei numerischen Werkzeugmaschinensteuerungen oder Programmierplätzen eingesetzt sind – ohne weiteres bewältigt werden kann.

Im folgenden wird die Durchführung des Verfahrens anhand von Zeichnungen näher erläutert.
Es zeigen:
Figur 1 eine Darstellung eines fertig bearbeiteten Werkstückes,
Figur 2 einen sehr stark vergrößerten Bildschirmausschnitt mit einem Muster, das die höchste Bearbeitungsebene darstellt,
Figur 3 einen entsprechenden Ausschnitt einer nächst tieferen Bearbeitungsebene,
Figur 4 einen entsprechenden Ausschnitt einer noch tieferen Bearbeitungsebene,
Figur 5 einen entsprechenden Ausschnitt einer sehr tiefen Bearbeitungsebene und
Figur 6 einen Ausschnitt, in dem eine Bearbeitungsebene dargestellt ist, in die von einem Fräser eine Nut eingefräst wird.

Zu den Zeichnungen ist grundsätzlich zu bemerken, daß sie aufgrund der schwierigen zeichnerischen Darstellungsverhältnisse stark vereinfacht und in vielen Teilen schematisiert sind. Ein zur Bearbeitung anstehendes Werkstück wird als weiße Silhouette auf schwarzem Grund dargestellt.

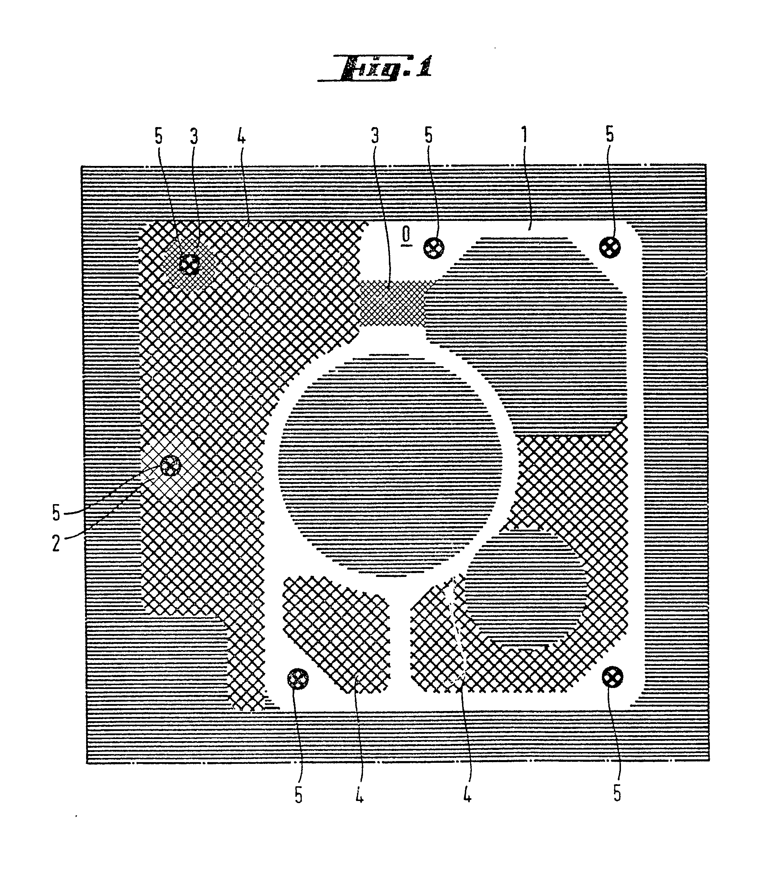

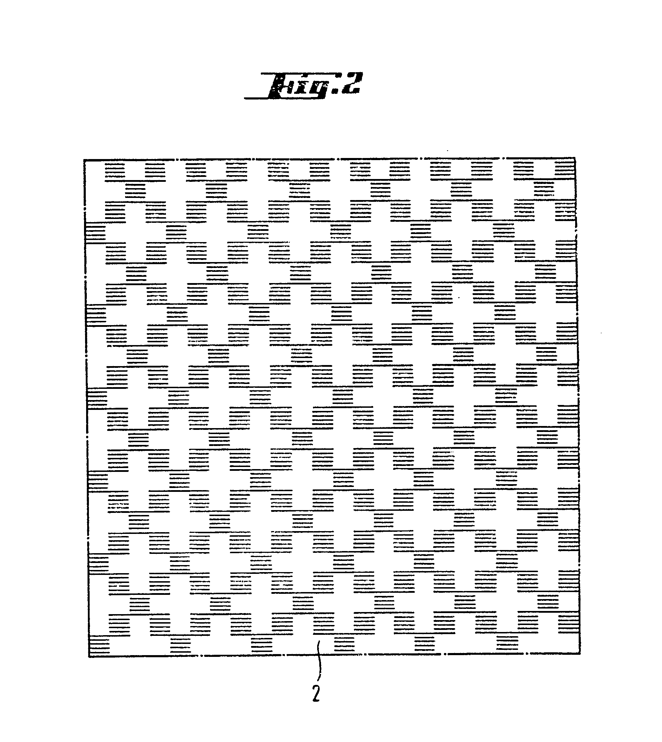

Ein in Figur 1 dargestelltes Werkstück 0 zeigt innen und außen bearbeitete Konturen. Diese Konturen sind durch Fräsbearbeitung entstanden und senkrecht zur Zeichnungsebene in der Tiefe gestaffelt. Die Staffelung entspricht den Bearbeitungsebenen, in denen der Fräser Material abgetragen hat. Die tiefste Bearbeitungsebene belegt dabei hierarchisch die höchste Stufe. Nach dem erfindungsgemäßen Verfahren wird in der graphischen Darstellung eine Bearbeitungsebene durch eine Betrachtungsebene simuliert. Die Betrachtungsebenen sind hierarchisch geordnet, das heißt eine Betrachtungsebene liegt höher in Richtung senkrecht zur Zeichenebene als die nächste usw.. Diesen Betrachtungsebenen sind jeweils graphische Muster zugeordnet, die als Gruppe ebenfalls hierarchisch geordnet sind. Die Muster weisen entsprechend ihrer hierarchischen Einstufung eine unterschiedliche Dichte ihrer Schraffur auf, was nun anhand der Figuren 2 bis 5 erläutert werden soll.

In der Figur 2 ist das Muster der niedrigsten hierarchischen Stufe dargestellt, das die Betrachtungs- bzw. Bearbeitungsebene der geringsten Tiefe repräsentiert. Hier ist der Anteil der geschwärzten Elemente am geringsten. Dieses Muster kann keines der hierarchisch höher stehenden Muster beeinflussen, worauf später noch näher eingegangen wird.

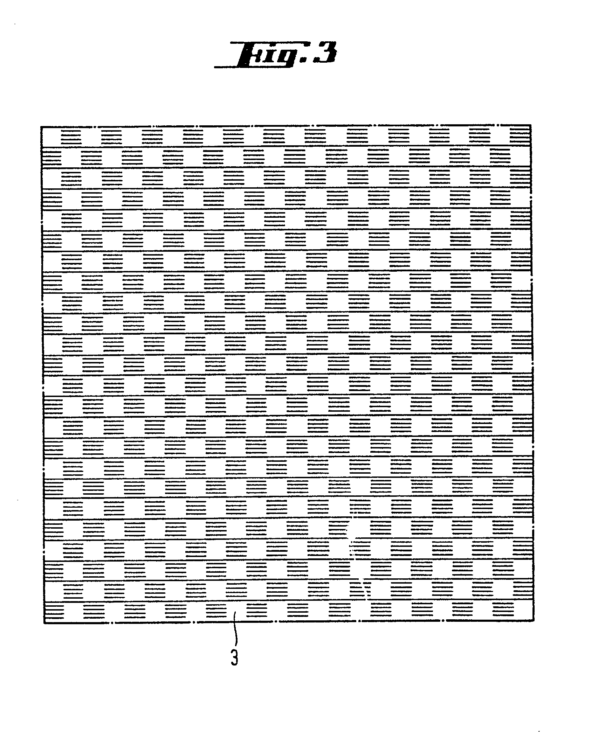

In Figur 3 ist der Anteil der geschwärzten Elemente schon erheblich höher, das bedeutet, daß dies das graphische Muster ist, welches der nächst höheren hierarchischen Stufe zugeordnet ist. Bei der Werkstückdarstellung repräsentiert dieses graphische Muster die Betrachtungs- bzw. Bearbeitungsebene, die tiefer liegt, als die gemäß der Figur 2.

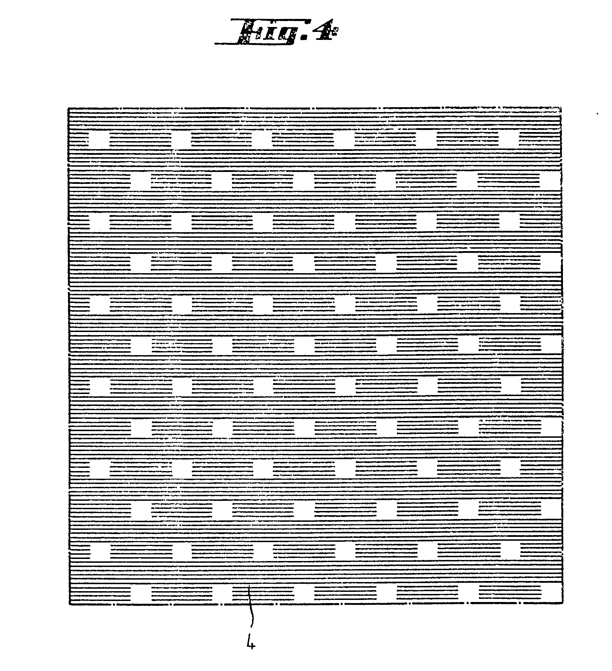

Eine noch tiefere Betrachtungs- bzw. Bearbeitungsebene wird durch das graphische Muster nach Figur 4 repräsentiert. Hier ist der Anteil der geschwärzten Elemente schon beträchtlich. Die mit diesem Muster versehenen Flächenpartien des Werkstückes 0 in Figur 1 befinden sich in der dritten Betrachtungs- bzw. Bearbeitungsebene am dargestellten Werkstück 0.

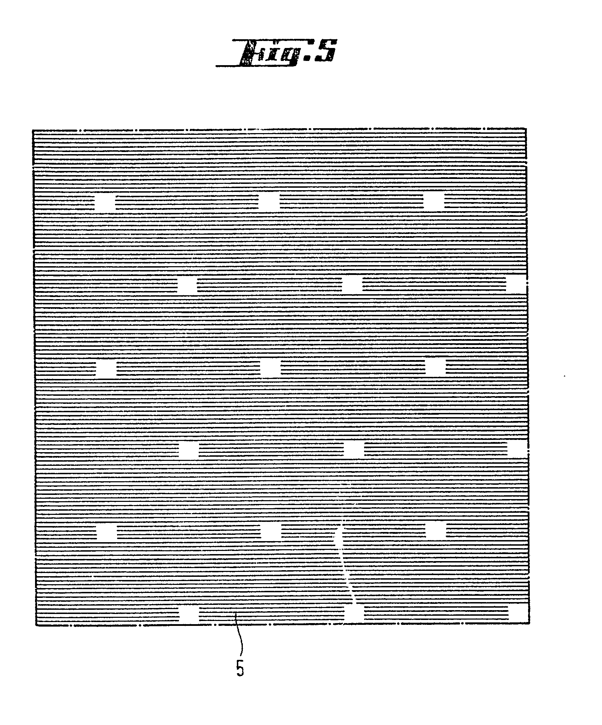

Eine vierte Betrachtungs- bzw. Bearbeitungsebene wird durch ein Muster gemäß der Figur 5 dargestellt. Hier sind nahezu sämtliche Bildanteile durch geschwärzte Elemente überdeckt.

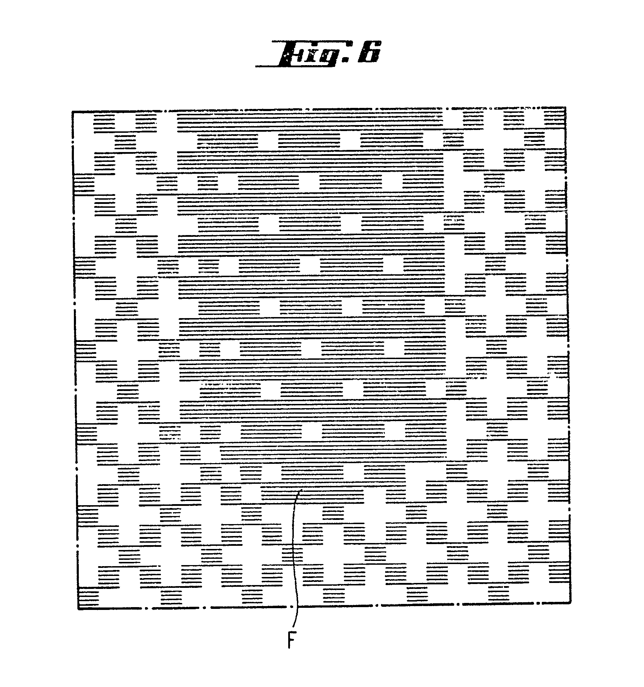

Die Verfahrensschritte, die zur Darstellung des Werkstückes 0 gemäß Figur 1 führen, sollen nunmehr anhand der Beschreibung der Figur 6 unter sinngemäßer Übertragung des Inhaltes der Figuren 2 bis 5 erläutert werden. Die Betrachtungs- bzw. Bearbeitungsebenen 2 bis 5, die in Figur 1 unterschiedlich schraffiert sind, sind mit den Ziffern der Figuren 2 bis 5 numeriert und die einzelnen Schraffuren versinnbildlichen die graphischen Muster in den jeweiligen, den Betrachtungs- bzw. Bearbeitungsebenen 2 bis 5 zugeordneten Figuren 2 bis 5.

Ein Werkstück 0 weist eine Oberfläche auf, die hier als Betrachtungs- bzw. Bearbeitungsebene 2 definiert ist. Die entsprechende Schraffur ist also in Figur 2 dargestellt. Die Bearbeitung des Werkstückes 0 erfolgt durch einen Fräser F, der sinnvollerweise durch einen ortsveränderlichen Kreis simuliert wird. Dieser Kreis wandert nun entsprechend der programmierten Werkzeugbahn über das, bzw. in das Werkstück 0. Wenn der Fräser F real mit dem Werkstück 0 in Eingriff kommt, wird Material abgetragen und die vom Fräser F hinterlassene Bahn stellt in der Tiefenstaffelung am Werkstück 0 eine weitere Betrachtungs- bzw. Bearbeitungsebene 4 dar. In der Simulation am Bildschirm wird die den Fräser F darstellende Scheibe mit dem graphischen Muster dieser weiteren Betrachtungsebene 4 ausgefüllt. Bei der programmierten Fräserbewegung bewegt sich nun die Scheibe F – das graphische Muster der neuen Ebene 4 enthaltend – im Werkstück 0 und «radiert» das Muster der ersten Ebene 2 während der Werkzeugbewegung aus. Dies ist möglich, da das graphische Muster der Ebene 4 hierarchisch höher ist, als das Muster der Ebene 2. In der Simulation wird die Darstellung in diesem Bereich dunkler, da der Anteil an geschwärzten Elementen im Muster 4 höher ist. Dieser simulierte Vorgang entspricht der Realität, denn nur wenn das Werkzeug in das Werkstück 0 auf tieferer Ebene eindringt, wird Material abgetragen und die vorher erzeugte Bearbeitungsebene bzw. Werkstückkontur verändert. Die vorher erzeugte Kontur wird also überschrieben und stört später nicht den Gesamteindruck, wie beim eingangs genannten Stand der Technik.

Die Werkzeugbahn der den Fräser F simulierenden Kreisscheibe «radiert» nun in dieser Betrachtungs- bzw. Bearbeitungsebene alle die Partien des Werkstückes 0, an denen tiefer gefräst wird, als die vorher erzeugte Bearbeitungsebene. Gleich hoch oder tiefer liegende Werkstückkonturen werden dabei nicht verändert, was wiederum der Realität entspricht.

Möglich wird diese realitätsentsprechende Darstellung bei der Simulation der Werkstückbearbeitung durch die hierarchische Ordnung der graphischen Muster und die Zerlegung des Werkstückes 0 in eine Betrachtungsebenenhierarchie, die der Hierarchie der graphischen Muster entspricht.

In äquivalenter Weise würde bei einem weiteren Bearbeitungsvorgang, der eine tiefere Betrachtungs- bzw. Bearbeitungsebene betrifft, die mit dem hierarchisch höheren graphischen Muster versehene Kreisscheibe F die hierarchisch niedrigeren graphischen Muster radieren.

Diese Radierung geht gegebenenfalls soweit, daß Partien des Werkstückes 0, bei denen das Material vollkommen abgetragen ist, als vollkommen geschwärzt erscheinen. Dementsprechend bleibt dort auch keine Werkzeugkontur stehen.

Auf diese Weise entsteht eine zweidimensionale Darstellung eines dreidimensionalen Gebildes mit Tiefenwirkung.

Die hierarchische Ordnung der graphischen Muster läßt sich auch nach den bekannten Regeln der subtraktiven Farblehre herstellen (siehe Meyers Lexikon der Tecknik und der exakten Naturwissenschaften, Ausgabe 1970, zweiter Band, Seiten 869 ff.). Nach diesen Regeln erscheint in der ersten Phase der Darstellung das Werkstück als weiße Silhouette. Bei der ersten Bearbeitung «radiert» der Fräser in der «blauen Ebene», so daß an diesen Partien Gelb erscheint. In der nächst tieferen Ebene wird in der «blauen und grünen Ebene radiert», so daß dann Rot erscheint. In der noch tiefer liegenden nächsten Ebene wird in der «blauen, grünen und roten Ebene radiert» und es erscheint Schwarz.

Es ist für den Fachmann ersichtlich, daß die hierarchische Ordnung der graphischen Muster auch durch eine Kombination von Farben und Schraffuren hergestellt werden kann, was die Vielseitigkeit des Verfahrens noch erhöht.

Von Bedeutung ist noch die Vielfalt, mit der die Festlegung der Betrachtungsebenen erfolgen kann. So ist es möglich, in das Werkstück eine Anzahl äquidistanter Betrachtungsebenen zu legen, die sich nach der Auflösung der graphischen Muster richtet.

Oder man legt in Kenntnis der technischen Werkstückzeichnung die Betrachtungsebenen in die Werkstückebenen, an denen tatsächlich eine Tiefenstaffelung auftritt.

Die vorteilhafteste Methode ist jedoch die, die Betrachtungsebenen durch die tatsächlichen, endgültigen Bearbeitungsebenen selbsttätig festzulegen. Dazu ist es erforderlich, daß beim Auftreten mehrerer Fräsvorgänge an einer programmierten Kontur in mehreren Ebenen nur jeweils der letzte Fräsvorgang das Festlegen der Betrachtungsebene auslöst. Mehrere Fräsvorgänge einer Kontur treten zum Beispiel häufig auf, wenn die Tiefenstaffelung zur vorausgegangenen Bearbeitungsebene so groß ist, daß der Fräser nicht in einer Zustellung bis zur nächst tieferen Ebene abspanen kann. Um zu vermeiden, daß in jeder «Zustellung» eine Betrachtungsebene «verbraucht» wird, darf nur der letzte Bearbeitungszyklus in der endgültigen Bearbeitungsebene die Festlegung einer Betrachtungsebene auslösen.

Es versteht sich, daß das erfindungsgemäße Verfahren nicht nur zur Darstellung von Fräsvorgängen, sondern auch bei beliebigen anderen Bearbeitungsvorgängen durchgeführt werden kann.

## Patentansprüche

1. Verfahren zur zweidimensionalen Darstellung eines durch ein Objekt veränderbaren dreidimensionalen Gebildes (0) mit Hilfe von Schnitten, vorzugsweise eines von einem Werkzeug bearbeiteten Werkstückes, auf dem Bildschirm einer Werkzeugmaschinensteuerung, dadurch gekennzeichnet, daß in das darzustellende Gebilde (0) mehrere in der Tiefe gestaffelte Betrachtungsebenen (2, 3, 4, 5) gelegt werden, die hierarchisch derart geordnet sind, daß der Betrachtungsebene (2) mit der geringsten Tiefe die hierarchisch niedrigste Stufe und der Betrachtungsebene (5) mit der größten Tiefe die hierarchisch höchste Stufe zugeordnet ist, wobei jeder Betrachtungsebene (2, 3, 4, 5) gemäß der vorgenannten Hierarchie ein grafisches Muster (2, 3, 4, 5) aus einer Gruppe verschiedener grafischer Muster (2, 3, 4, 5) zugeordnet ist, von denen das hierarchisch höhere das hierarchisch niedere Muster überschreibt (radiert) und daß Veränderungen des darzustellenden Gebildes (0) durch das Objekt (F) in einer Betrachtungsebene (2, 3, 4, 5) mit Hilfe eines ortsveränderlichen Teilstückes (F) des dieser Betrachtungsebene entsprechenden graphischen Musters in der Weise erfolgen, daß Darstellungen der höher liegenden Betrachtungsebenen entsprechend der zu bearbeitenden Bereiche (radiert), jedoch Darstellungen gleich hoher oder tiefer liegender Betrachtungsebenen unbeeinflußt bleiben.

2. Verfahren nach Anspruch 1, dadurch gekennzeichnet, daß die Darstellung des Gebildes (0) in mehreren Projektionen (Ansichten) erfolgt.

3. Verfahren nach Anspruch 1 und 2, dadurch gekennzeichnet, daß die Darstellung des Gebildes (0) in drei orthogonalen Projektionen erfolgt.

4. Verfahren nach Anspruch 1, dadurch gekennzeichnet, daß die hierarchisch geordneten graphischen Muster (2, 3, 4, 5) durch synchronisierte Schraffuren mit unterschiedlicher Dichte gebildet werden.

5. Verfahren nach Anspruch 1, dadurch gekennzeichnet, daß die hierarchisch geordneten graphischen Muster durch Farben bzw. Farbmischung gebildet werden.

6. Verfahren nach Anspruch 1, 4 und 5, dadurch gekennzeichnet, daß die hierarchisch geordneten graphischen Muster durch Schraffuren unterschiedlicher Dichte in Kombination mit Farben bzw. Farbmischung gebildet werden.

7. Verfahren nach Anspruch 1, dadurch gekennzeichnet, daß in das Gebilde (0) äquidistante Betrachtungsebenen gelegt werden.

8. Verfahren nach Anspruch 1, dadurch gekennzeichnet, daß die Betrachtungsebenen (2, 3, 4, 5) simulierte – von spanenden Werkzeugen erzeugte – Bearbeitungsebenen darstellen.

9. Verfahren nach Anspruch 1, dadurch gekennzeichnet, daß die Betrachtungsebenen (2, 3, 4, 5) in Kenntnis der technischen Werkstückzeichnung nach geometrischer Zweckmäßigkeit festgelegt werden.

10. Verfahren nach Anspruch 1 und 8, dadurch gekennzeichnet, daß die Betrachtungsebenen (2, 3, 4, 5) durch die Bearbeitungsebenen selbsttätig festgelegt werden, wobei bei mehrfacher Bearbeitung derselben Werkstückkontur in mehreren Bearbeitungsebenen ausschließlich die letzte Bearbeitungsebene die Betrachtungsebene festlegt.

11. Verfahren nach Anspruch 1 und 8, dadurch gekennzeichnet, daß die Bewegung und Wirkung des Werkzeuges in einer Projektion mit Hilfe einer wandernden Werkzeugsilhouette (F) simuliert wird, die mit dem der entsprechenden Betrachtungsebene zugeordneten graphischen Muster versehen ist.

## Claims

1. Method for two-dimensional representation of a three-dimensional form (0) modifiable by an object with the aid of sections, preferably a workpiece worked by a tool, on the screen of a machine tool control, characterized in that a plurality of viewing planes (2, 3, 4, 5) stacked in depth are established in the form (0) to be represented, which are so arranged hierarchically that the viewing plane (2) with the smallest depth is associated with the hierarchically lowest stage and the viewing plane (5) with the greatest depth with the hierarchically highest stage, wherein each viewing plane (2, 3, 4, 5) is associated according to the aforesaid hierarchy with a graphical pattern (2, 3, 4, 5) from a group of different patterns (2, 3, 4, 5), for which the hierarchically higher overwrite (erase) the hierarchically lower patterns and the modification of the form (0) to be realized by the object (F) in a viewing plane (2, 3, 4, 5) takes place with the aid of a positionally variable portion (F) of the graphic pattern corresponding to this viewing plane in such a manner that representations of the higher lying viewing planes corresponding to the regions to be worked are overwritten (erased), while representations of the same height or deeper lying viewing planes remain unaffected.

2. Method according to claim 1, characterized in that the representation of the form (0) is effected in a plurality of projections (views).

3. Method according to claims 1 and 2, characterized in that the representation of the form (0) is effected in three orthogonal projections.

4. Method according to claim 1, characterized in that the hierarchically arranged graphical patterns (2, 3, 4, 5) are formed with different densities by synchronized hatching.

5. Method according to claim 1, characterized in that the hierarchically arranged graphical patterns are formed by colours or colour mixing.

6. Method according to claim 1, 4 an 5, characterized in that the hierarchically arranged graphical patterns are formed by hatching of different densities in combination with colours or colour mixing.

7. Method according to claim 1, characterized in that equidistant viewing planes are established in the form (0).

8. Method according to claim 1, characterized in that the viewing planes (2, 3, 4, 5) represent simulated working planes – created by material-removing tools.

9. Method according to claim 1, characterized in that the viewing planes (2, 3, 4, 5) are determined in the knowledge of the technical drawings according to geometrical convenience.

10. Method according to claim 1 and 8, characterized in that the viewing planes (2, 3, 4, 5) are automatically determined by the working planes, wherein in multiple working of the same workpiece in a plurality of working planes exclusively the last working plane determines the viewing plane.

11. Method according to claim 1 and 8, characterized in that the movement and action of the tool in a projection are simulated with the aid of a travelling tool silhouette (F), which is provided with the graphical pattern associated with the corresponding viewing plane.

**Revendications**

1. Procédé de représentation bidimensionnelle, à l'aide de coupes, d'une structure tridimensionnelle (0) modifiable par un objet, de préférence d'une pièce usinée par un outil, sur l'écran d'une commande de machine-outil, caractérisé par le fait que l'on prévoit, dans la structure (0) à représenter, plusieurs plans de visualisation (2, 3, 4, 5) échelonnés en profondeur, lesquels sont hiérarchisés de manière que le plan de visualisation (2) ayant la plus faible profondeur soit affecté à la classe hiérarchiquement la plus basse et que le plan de visualisation (5) ayant la plus grande profondeur soit affecté à la classe hiérarchiquement la plus haute, un motif graphique (2, 3, 4, 5) parmi un groupe de différents motifs graphiques (2, 3, 4, 5) étant associé à chaque plan de visualisation (2, 3, 4, 5) selon la hiérarchie précitée, le motif hiérarchiquement plus haut venant en surimpression (effet d'effacement) sur le motif hiérarchiquement plus bas, et par le fait que les modifications de la structure à représenter (0) provoquées par l'objet (F) dans un plan de visualisation (2, 3, 4, 5) à l'aide d'un élément (F) à position variable du motif graphique correspondant à ce plan de visualisation s'effectuent de manière que des représentations des plans de visualisation situés plus haut réalisant des surimpressions (soient effacées) en fonction des zones à usiner, mais que les représentations de plans de visualisation situés à même hauteur ou plus bas restent non influencées.

2. Procédé selon revendication 1, caractérisé par le fait que la représentation de la structure (0) est réalisée en plusieurs projections (vues).

3. Procédé selon la revendication 1 ou 2, caractérisé par le fait que la représentation de la structure (0) est effectuée en trois projections orthogonales.

4. Procédé selon revendication 1, caractérisé par le fait que les motifs graphiques hiérarchisés (2, 3, 4, 5) sont formés par des hachures synchronisées ayant des densités différentes.

5. Procédé selon revendication 1, caractérisé par le fait que les motifs graphiques hiérarchisés sont formés par des couleurs ou par mélange de couleurs.

6. Procédé selon revendications 1, 4 ou 5, caractérisé par le fait que les motifs graphiques hiérarchisés sont constitués par des hachures de densités différentes, en combinaison avec des couleurs ou mélanges de couleurs.

7. Procédé selon revendication 1, caractérisé par le fait que les plans de visualisation sont équidistants au sein de la structure (0).

8. Procédé selon revendication 1, caractérisé par le fait que les plans de visualisation (2, 3, 4, 5) représentent des plans d'usinage simulés, générés par des outils travaillant par enlèvement de copeaux.

9. Procédé selon revendication 1, caractérisé par le fait que les plans de visualisation (2, 3, 4, 5) sont déterminés selon une disposition géométrique, choisie en fonction du dessin technique de la pièce.

10. Procédé selon revendication 1 ou 8, caractérisé par le fait que les plans de visualisation (2, 3, 4, 5) sont fixés automatiquement par les plans d'usinage, et par le fait qu'en cas d'usinage multiple du même contour de pièce dans plusieurs plans d'usinage, c'est exclusivement le dernier plan d'usinage qui fixe le plan de visualisation.

11. Procédé selon revendication 1 ou 8, caractérisé par le fait que le mouvement et l'action de l'outil dans une projection sont simulés à l'aide d'une silhouette d'outil mobile (F) qui est munie du motif graphique associé au plan de visualisation correspondant.

Fig.1

## Fig.2

2

# Fig.3

3

Fig.4

4

Fig.5

5

## Fig. 6

F